# EUROPÄISCHE PATENTANMELDUNG

(11) **EP 2 732 851 A1**
(43) Veröffentlichungstag der Anmeldung: **21.05.2014**
(21) Anmeldenummer: 13165143.2
(22) Anmeldetag: 24.04.2013
(51) Int. Cl.: A62C 2/12, F16L 5/04, F24F 13/02

(54) **Einbauelement für eine Brandschutzklappe sowie Brandschutzklappe mit einem Einbauelement**

(30) Priorität: 16.11.2012 DE 202012104425 U
(71) Anmelder: TROX GmbH, 47506 Neukirchen-Vluyn (DE)
(72) Erfinder: Sefker, Thomas, 47506 Neukirchen-Vluyn (DE); Beutelt, Björn, 47228 Duisburg (DE); Weck, Ronny Peter, 46519 Alpen (DE)
(74) Vertreter: DR. STARK & PARTNER

(57) **Zusammenfassung**

Die Erfindung betrifft ein Einbauelement 3 für eine Brandschutzklappe, die ein Gehäuse 1 mit einer darin um eine Schwenkachse herum schwenkbar gelagerte Absperrklappe umfasst. Um ein Einbauelement 3 anzugeben, das einen universelleren Einbau herkömmlicher Brandschutzklappen bei unterschiedlichsten baulichen Gegebenheiten ermöglicht, wobei die Montage des Einbauelementes 3 an der Brandschutzklappe sowohl bereits werkseitig als auch erst auf der Baustelle selbst möglich sein soll, soll das Einbauelement das Gehäuse 1 außenseitig umfassen, wobei das Einbauelement 3 in Umfangsrichtung wenigstens zwei Segmente 9 umfasst, die derart ausgebildet sind, dass jedes Segment 9 seitlich von außen, insbesondere in radialer Richtung, an dem Gehäuse 1 anbringbar ist, und wobei die Segmente 9 des Einbauelementes 3 sich entweder an zwei Stoßkanten 9a mit dem anderen Segment 9 berühren oder aber sich an einer ersten Stoßkante 9a mit dem einen benachbarten Segment 9 und an einer zweiten Stoßkante 9a mit dem anderen benachbarten Segment 9 berühren, wobei die Dichte zumindest eines Segmentes, vorzugsweise die Dichte aller Segmente des Einbauelementes, zwischen 120 kg/m³ und 180 kg/m³, vorzugsweise bei 150 kg/m³, liegt. Die Erfindung betrifft auch eine Brandschutzklappe mit einem solchen Einbauelement.

## Beschreibung

Die Erfindung betrifft ein Einbauelement für eine Brandschutzklappe, die ein Gehäuse mit einer darin um eine Schwenkachse herum schwenkbar gelagerte Absperrklappe umfasst.

Brandschutzklappen sind aus der Praxis in verschiedenen Ausführungen bekannt. Sie besitzen eine schwenkbar gelagerte Absperrklappe, die manuell oder motorisch betätigt werden kann. Brandschutzklappen werden als Teil von Lüftungsleitungen in Wanddurchführungen eingebaut. Sie sollen im Brandfall die Lüftungsleitung abschließen und verhindern, dass sich ein Brand aus einem Raum in den nächsten Raum ausbreitet. Brandschutzklappen werden üblicherweise zum Einbau in eine Wand vermörtelt. Hierzu wird eine Öffnung in die Wand eingebracht und die Brandschutzklappe in dieser Öffnung positioniert. Der sich ergebende umlaufende Spalt wird mit einem Mörtel oder dergleichen verfüllt.

Bekannt ist beispielsweise auch eine Brandschutzklappe mit einem außenseitigen Einbaukörper, der mit einer wärmeabsorbierenden Vergussmasse gefüllt ist. Nachteilig ist, dass entsprechende Brandschutzklappen recht schwer sind.

Ferner werden sie bereits werkseitig fertigmontiert. Da die Größe des Einbaukörpers auf die jeweilige Bausituation angestimmt sein muss, sind bereits fertig montierte Brandschutzklappen nur in einem engen Bereich einsetzbar.

Aufgabe der Erfindung ist es, die vorgenannten Nachteile zu vermeiden und ein Einbauelement anzugeben, das einen universelleren Einbau herkömmlicher Brandschutzklappen bei unterschiedlichsten baulichen Gegebenheiten ermöglicht, wobei die Montage des Einbauelementes an der Brandschutzklappe sowohl bereits werkseitig als auch erst auf der Baustelle selbst möglich sein soll.

Diese Aufgabe wird dadurch gelöst, dass das Einbauelement das Gehäuse außenseitig umfasst, wobei das Einbauelement in Umfangsrichtung wenigstens zwei Segmente umfasst, die derart ausgebildet sind, dass jedes Segment seitlich von außen, insbesondere in radialer Richtung, an dem Gehäuse anbringbar ist, und wobei die Segmente jedes Einbauelementes sich entweder an zwei Stoßkanten mit dem anderen Segment berühren oder aber sich an einer ersten Stoßkante mit dem einen benachbarten Segment und an einer zweiten Stoßkante mit dem anderen benachbarten Segment berühren, wobei die Dichte zumindest eines Segmentes, vorzugsweise die Dichte aller Segmente des Einbauelementes, zwischen 120 kg/m³ und 180 kg/m³, vorzugsweise bei 150 kg/m³, liegt. Jedes Segment kann auf eine einfache Weise, wie beispielsweise durch Sägen oder Schneiden, an die Außenkontur des Gehäuses angepasst werden.

Unter der Dichte wird die Dichte verstanden, die das Material vor einer eventuellen Verarbeitung und auch vor einer eventuellen Anpassung an die Kontur des Gehäuses aufweist. Ist der Querschnitt des Gehäuses beispielsweise viereckig, so kann das Einbauelement beispielsweise aus vier Segmenten bestehen, die eine entsprechende Anlage an die Außenwandung des Gehäuses erlauben.

Während bei bisher bekannten Einbaulösungen die Brandschutzklappe im Vorfeld mit der Lüftungsleitung verbunden werden musste, erlaubt das erfindungsgemäße Einbauelement auch eine Montage der Brandschutzklappe vor dem Anschluss an die Lüftungsleitungen in einer Tragkonstruktion, wie z.B. in einer Wand. Darüber hinaus ermöglicht das erfindungsgemäße Einbauelement auch eine Umrüstung oder Nachrüstung, um beispielsweise eine Brandschutzklappe vor Ort an eine geänderte Einbausituation anzupassen. Eine bereits installierte Brandschutzklappe kann problemlos mit einem anderen Einbauelement ergänzt oder versehen werden, so dass der Einsatzbereich der Brandschutzklappe deutlich erweitert wird.

Da für die Fertigung des Einbauelementes leicht zu bearbeitende Materialien eingesetzt werden können, ist eine preiswertige Herstellung des Einbauelements bei gleichzeitiger Erhöhung des Einsatzbereiches möglich. Auch kann gegenüber herkömmlichen Brandschutzklappen eine Gewichtsersparnis von bis zu 50% realisiert werden, was das Handling sowohl bei der Produktion als auch bei der Montage vereinfacht.

Das Einbauelement gewährleistet eine gute Kaltabdichtung und ist selbstverständlich nicht korrodierend. Eventuelle Maßtoleranzen, die beispielsweise zu einem Hohlraum oder einem Spalt beispielsweise zwischen der Einbauöffnung und dem Einbauelement oder zwischen dem Einbauelement und dem Gehäuse führen könnten, werden dadurch ausgeglichen, dass jedes Segment in einem gewissen Maße leicht kompressibel ist, so dass eine hinreichende Dichtigkeit gegeben ist.

Es bietet sich an, wenn das Einbauelement in einer Richtung parallel zur Strömungsrichtung S luftdicht und damit nicht durchströmbar ist.

Dabei kann jedes Segment je eine Ausnehmung für einen Teilbereich des Gehäuses aufweisen, wobei jede Ausnehmung derart ausgebildet ist, dass das Segment seitlich von außen, insbesondere in radialer Richtung, an dem Gehäuse anbringbar ist. Sofern beispielsweise der Gehäusequerschnitt rund ausgebildet ist, weist bei einer zweiteiligen Ausführung des Einbauelementes jedes Segment vorzugsweise eine entsprechend dem Durchmesser des Gehäuses angepasste halbkreisförmige Ausnehmung auf, so dass die Segmente leicht montiert werden können und das Gehäuse vollständig ummantelt ist.

Zumindest ein Segment, vorzugsweise zumindest alle Segmente des Einbauelementes, können aus einem Mineralfasermaterial, insbesondere aus Steinwolle, Glaswolle, Keramikwolle oder dergleichen, bestehen. Entsprechende Materialien sind gut trennbar. Sie können gut geschnitten oder gesägt werden, so dass selbst vor Ort problemlos noch eine Anpassung möglich ist. Damit ist eine einfache Konfektionierung und Anpassung eines Segmentes an die Außenkontur des Gehäuses beispielsweise mittels einer Säge oder eines Messers gewährleistet. Der Schmelzpunkt des Mineralfasermaterials ist vorzugsweise größer 1000°C, wobei die spezifische Wärmekapazität etwa 0,84 kJ(kgK) und die Wasseraufnahme ≤ 1kg/m² betragen.

Zwischen dem Gehäuse und zumindest einem Segment kann eine Klebemasse vorgesehen sein. Hierdurch wird die Verbindung zwischen Segment und Gehäuseaußenseite verbessert. Gleichzeitig dichtet die Klebemasse einen eventuellen Freiraum zwischen Segment und Gehäuseaußenseite ab.

Zumindest zwei sich berührende Segmente des Einbauelementes können über eine Klebemasse miteinander verbunden sein. Hierdurch wird die Verbindung zwischen zwei benachbarten Segmenten im Bereich der Stoßkanten verbessert. Gleichzeitig dichtet die Klebemasse einen eventuellen Freiraum zwischen den beiden benachbarten Segmenten ab.

Zumindest bei einem Segment, vorzugsweise bei allen Segmenten, kann auf der dem Gehäuse abgewandten Außenseitenfläche eine Beschichtung, vorzugsweise eine luftundurchlässige und damit auch rauchdichte Beschichtung, vorgesehen sein. Diese Beschichtung kann bereits werkseitig auf die Segmente aufgebracht werden. Die Beschichtung verbessert die Feuerbeständigkeit und dient gleichzeitig als Oberflächenschutz. Es ist aber auch durchaus möglich, dass die Brandschutzklappe zunächst in eine Einbauöffnung eingebaut und die erforderlichen Segmente in die mauerseitige Einbauöffnung eingesetzt werden. Anschießend kann der zwischen der Außenseite der Segmente und der Einbauöffnung bestehende Spalt mit einer Klebemasse als Beschichtung gefüllt werden. Bei einem solchen Ausführungsbeispiel verschließt und dichtet die Klebemasse zum einen den Freiraum ab und stellt zum anderen eine sichere Verbindung zwischen den Segmenten und der Einbauöffnung her. Sofern die Beschichtung aus einem bei steigender Temperatur aufblähenden Material besteht, wird ein eventuell noch vorhandener Spalt zwischen dem Einbauelement und der Einbauöffnung durch das Aufblähen geschlossen, so dass eine hinreichende Dichtigkeit gegeben ist. Im aufgeblähten Zustand ist auch eine Luftundurchlässigkeit gewährleistet. Auch kann der Verbund bestehend aus dem Segment und der darauf aufgebrachten Beschichtung eine gewisse Verformbarkeit aufweisen. Dies ermöglicht das Einsetzen in eine Einbauöffnung mit geringfügig geringeren Abmessungen.

Es bietet sich an, wenn zumindest eine der beiden orthogonal zur Strömungsrichtung S ausgerichteten Seitenflächen des Einbauelementes eine Beschichtung, vorzugsweise eine luftundurchlässige und damit auch rauchdichte Beschichtung, aufweisen. Bei diesen Seitenflächen handelt es sich um die in Strömungsrichtung gesehenen Stirnflächen des Einbauelementes.

Bei einem bevorzugten Ausführungsbeispiel weist(weisen) zumindest eine orthogonal zur Strömungsrichtung S ausgerichtete Seitenfläche, vorzugsweise beide orthogonal zur Strömungsrichtung S ausgerichtete Seitenflächen, je eine Beschichtung auf, und auch die dem Gehäuse abgewandte Außenseitenfläche des Einbauelementes weist eine Beschichtung auf, wobei vorzugsweise die eine Beschichtung und die andere Beschichtung aus demselben Material bestehen. Beide Beschichtungen bestehen vorzugsweise aus einem luftundurchlässigen und damit rauchdichten Material.

Die Klebemasse und/oder die Beschichtung kann (können) aus einem intumeszierenden Material bestehen. Im aufgeblähten Zustand ist(sind) die Klebemasse und/oder die Beschichtung dann luftundurchlässig und damit rauchdicht. Die Klebemasse ist temperaturbeständig und besteht aus blähfähigen Substanzen und Bindemittel. Sie stellt eine dispersionsgebundene hochviskose Masse mit Intumeszenswirkstoffen, Pigmenten und Hilfsstoffen dar. Die Klebemasse ist frei von Halogenen, Asbest, künstlichen Mineralfasern und organischen Lösungsmitteln. Die Klebemasse ist vor dem Austrocknen vorzugsweise pastös und nach dem Austrocknung weichelastisch. Die Dichte liegt im Bereich von 1,2 g/cm³ bis 1,5 g/cm³. Der pH-Wert beträgt etwa 8,0.

Als Beschichtung kann beispielsweise eine durchgehende Farbbeschichtung, ein entsprechend vorbehandelter und auf diese Weise luftundurchlässig gewordener Vlies, eine Aluminiumbeschichtung oder dergleichen vorgesehen sein.

Die Erfindung betrifft auch eine Brandschutzklappe mit einem Einbauelement nach einem der vorhergehenden Ansprüche.

Dabei bietet es sich an, wenn in Längserstreckung des Gehäuses gesehen zumindest zwei Einbauelemente vorgesehen sind, wobei jedes Einbauelement aus wenigstens zwei Segmenten mit je einer Ausnehmung für einen Teilbereich des Gehäuses besteht und wobei sich benachbarte Einbauelemente, insbesondere flächig über ihre jeweilige Stirnfläche, berühren.

Um einen unerwünschten Durchtritt eines strömenden Mediums durch den zwischen den Stoßkanten zweier aneinandergrenzender Segmente gebildeten spaltartigen Freiraum zu vermeiden, bietet es sich an, wenn sich die Stoßkanten aller Einbauelemente in Strömungsrichtung gesehen nicht miteinander fluchtend angeordnet sind.

Zumindest zwei sich berührende Segmente benachbarter Einbauelemente können über eine Klebemasse miteinander verbunden sein. Hierdurch wird die Verbindung zwischen zwei benachbarten Segmenten zweier Einbauelemente verbessert und gleichzeitig ein eventueller Freiraum zwischen zwei benachbarten Segmenten zweier Einbauelemente abgedichtet.

Dabei kann die Klebemasse aus einem intumeszierenden Material bestehen. Die Klebemasse ist temperaturbeständig und besteht aus blähfähigen Substanzen und Bindemittel. Sie stellt eine dispersionsgebundene hochviskose Masse mit Intumeszenswirkstoffen, Pigmenten und Hilfsstoffen dar. Die Klebemasse ist frei von Halogenen, Asbest, künstlichen Mineralfasern und organischen Lösungsmitteln. Die Klebemasse ist vor dem Austrocknen vorzugsweise pastös und nach dem Austrocknung weichelastisch. Die Dichte liegt im Bereich von 1,2 g/cm³ bis 1,5 g/cm³. Der pH-Wert beträgt etwa 8,0.

An der Brandschutzklappe kann zumindest eine Halteöse vorgesehen sein. Bei einer runden Ausführungsform bieten sich beispielsweise drei im 120°-Winkel zueinander angeordnete Halteösen an. Diese ermöglichen die vertikale und horizontale Ausrichtung der Brandschutzklappe innerhalb einer Einbauöffnung. Gleichzeitig definieren sie auch die Einbautiefe, damit gewährleistet ist, dass sich die Schwenkachse des Absperrklappenblattes innerhalb der Einbauöffnung befindet.

Im Folgenden werden in den Zeichnungen dargestellte Ausführungsbeispiele der Erfindung erläutert. Es zeigen:
- Fig. 1: eine schräge Seitenansicht auf ein erstes Ausführungsbeispiel einer in einer Wand installierten Brandschutzklappe,
- Fig. 2: einen Schnitt durch das Einbauelement und das Gehäuse nach Fig. 1,
- Fig. 3: eine schräge Seitenansicht auf ein zweites Ausführungsbeispiel einer in einer Wand installierten Brandschutzklappe,
- Fig. 4: einen Schnitt durch das Einbauelement und das Gehäuse nach Fig. 3,
- Fig. 5: eine schräge Seitenansicht auf ein drittes Ausführungsbeispiel einer in einem verkleideten Abschnitt installierten Brandschutzklappe,
- Fig. 6: einen Schnitt durch das Einbauelement und das Gehäuse nach Fig. 5,
- Fig. 7: eine schräge Seitenansicht auf ein viertes Ausführungsbeispiel einer in einer Wand installierten Brandschutzklappe,
- Fig. 8: eine schräge Seitenansicht auf ein fünftes Ausführungsbeispiel einer in einer Wand installierten Brandschutzklappe,
- Fig. 9: eine schräge Rückansicht auf eine Brandschutzklappe nach Fig. 7 ohne Wand und
- Fig. 10: eine Ansicht auf ein aus zwei Segmenten bestehendes Einbauelement.

In allen Figuren werden für gleiche bzw. gleichartige Bauteile übereinstimmende Bezugszeichen verwendet.

Die Figuren zeigen Brandschutzklappen, die jeweils ein Gehäuse 1 mit einer darin um eine Schwenkachse herum schwenkbar gelagerten Absperrklappe aufweisen. Die einzelnen Bauteile der Brandschutzklappe sind nicht dargestellt. Es ist lediglich eine Montageplatte 2 angedeutet, auf die Bauteile, wie z.B. ein Betätigungsgriff, ein Antrieb oder dergleichen, montiert werden können.

Um jede Brandschutzklappe herum ist ein Einbauelement 3 als Einbaurahmen angeordnet. Dieses Einbauelement 3 ermöglicht die Montage der Brandschutzklappe in einer Einbauöffnung 4 einer Tragkonstruktion, die vorliegend als Wand 5 ausgebildet ist.

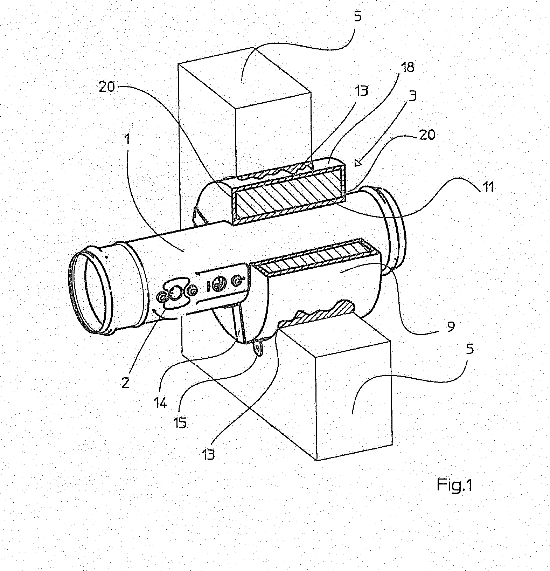

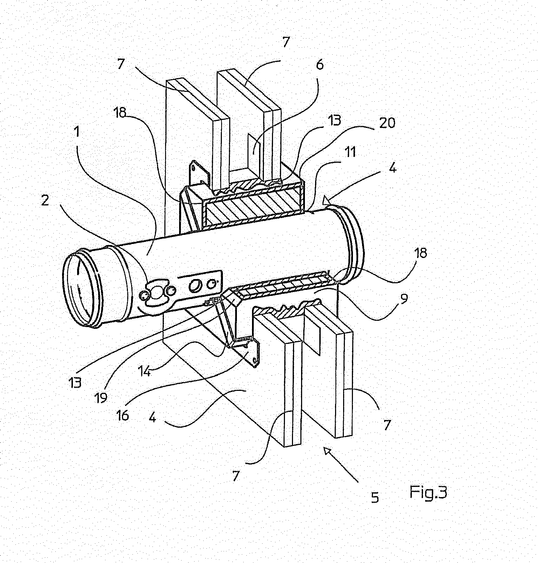

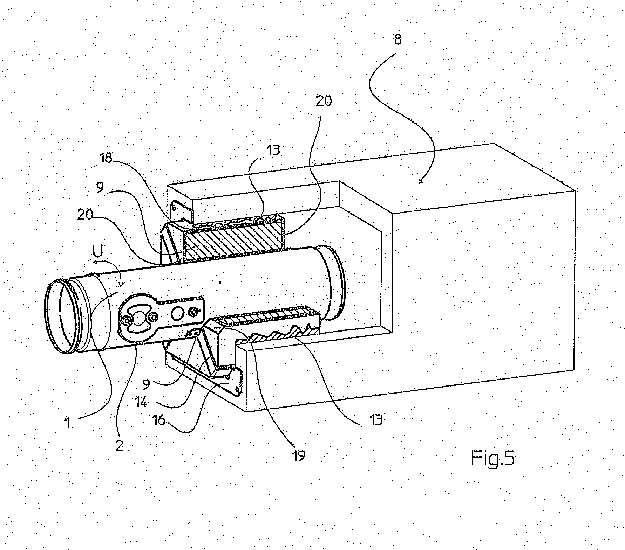

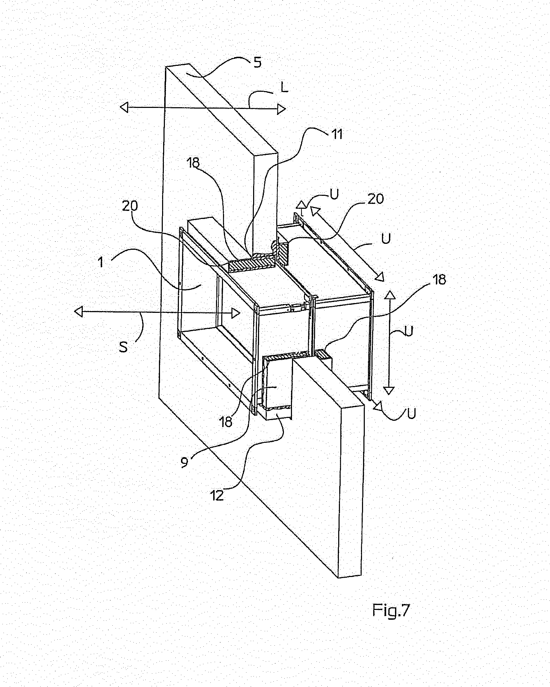

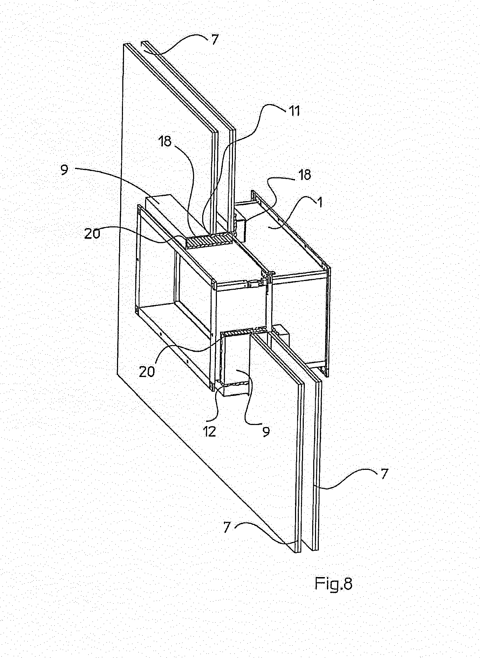

Bei der Wand 5 kann es sich beispielsweise um eine Massivwand handeln, die in den Fig. 1 oder 7 dargestellt ist. Die Wand 5 kann auch eine Ständerkonstruktion aufweisen, sowie es in den Fig. 3 oder 8 dargestellt ist. Eine solche Ständerkonstruktion weist Ständerelemente 6, die beidseitig mit Platten 7 verkleidet sind. Es ist aber auch möglich, dass der Einbau weit "entfernt" von einer Wand 5 in einem verkleideten Abschnitt 8 erfolgt, sowie es beispielhaft in Fig. 5 dargestellt ist.

In den Figuren sind unterschiedliche Ausführungsbeispiele eines erfindungsgemäßen Einbauelementes 3 dargestellt. Jedes Einbauelement 3 besteht aus einer Anzahl an Segmenten 9, die beliebig sein kann. Bei den Ausführungsbeispielen nach den Fig. 1 bis 6 weist jedes Segment 9 eine Ausnehmung 10 für einen Teilbereich des Gehäuses 1 einer Brandschutzklappe auf. Jede Ausnehmung 10 ist derart ausgebildet, dass das Segment 9 seitlich von außen, insbesondere in radialer Richtung, an dem Gehäuse 1 anbringbar ist und mit diesem im montierten Zustand in Kontakt ist.

Wie die Figuren zeigen, dient das Einbauelement 3 als Einbaurahmen, dessen Ausgestaltung beliebig ausgebildet sein kann. So können die Segmente 9 beliebig an jeden Querschnitt sowohl des Gehäuses 1 als auch der Einbauöffnung 4 angepasst werden.

Jedes Segment 9 besteht in den dargestellten Ausführungsbeispielen aus einem Mineralfasermaterial, wie beispielsweise Steinwolle, Glaswolle, Keramikwolle oder dergleichen. Beide orthogonal zur Strömungsrichtung S ausgerichtete Seitenflächen des Einbauelementes 3 weisen je eine Beschichtung 18 auf. Auch auf der dem Gehäuse 1 abgewandten Außenseitenfläche des Einbauelementes 3 ist eine Beschichtung 20 vorgesehen, wobei in den dargestellten Ausführungsbeispielen die Beschichtungen 18 und 20 aus demselben Material bestehen.

Da die Beschichtungen 18 und 20 luftundurchlässig sind, ist jedes Einbauelement 3 insgesamt in einer Richtung parallel zur Strömungsrichtung S luftdicht und damit nicht durchströmbar.

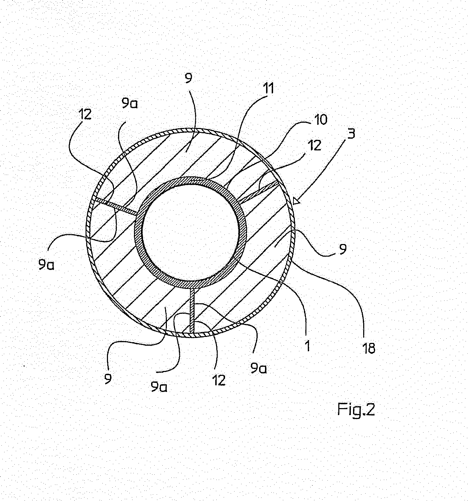

In den Fig. 1 und 2 ist eine rundes Gehäuse 1 dargestellt, das in eine runde Einbauöffnung 4 eingesetzt ist. In dem dargestellten Ausführungsbeispiel besteht das Einbauelement 3 aus drei Segmenten 9, die jeweils einen Winkel von etwa 120° abdecken. Da mehr als zwei Segmente 9 vorgesehen sind, berühren sich die Segmente 9 an einer ersten Stoßkante 9a mit dem einen benachbarten Segment 9 und an einer zweiten Stoßkante 9a mit einem anderen benachbarten Segment 9. Zwischen dem Gehäuse 1 und jedem Segment 9 ist eine Klebemasse 11 vorgesehen. Eine entsprechende Klebemasse 12 ist auch zwischen zwei sich berührenden Segmenten 9 vorgesehen.

Der Spalt zwischen der dem Gehäuse 1 abgewandten Außenseitenfläche jedes Segmentes 9, auf der die Beschichtung 20 vorgesehen ist, und dem Rand der Einbauöffnung 4 ist ebenfalls mit einer Klebemasse 13 verfüllt. Diese kann entweder bereits werksseitig als Beschichtung aufgebracht worden sein oder vor Ort im noch nicht ausgehärteten Zustand in den Spalt eingebracht werden, wo sie aushärtet und den Spalt verschließt.

In Fig. 3 ist eine Einbausituation eines runden Gehäuses 1 in einer rechteckigen Einbauöffnung 4 dargestellt. Auch hier ist das Einbauelement 3 aus drei Segmenten 9 aufgebaut. Die Außenkontur des Einbauelementes 3 ist an die Kontur der Einbauöffnung 4 angepasst.

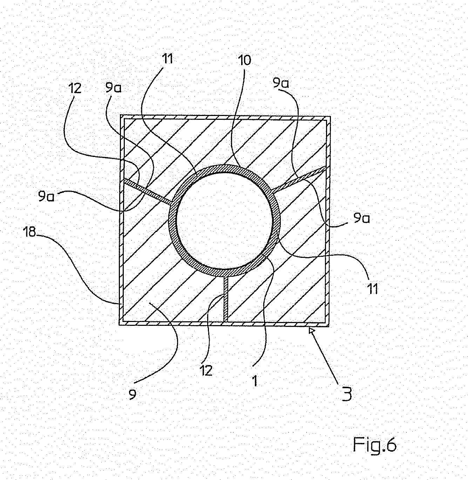

In den Fig. 5 und 6 ist eine Einbausituation eines runden Gehäuses 1 in einem rechteckigen Abschnitt 8, der aus je vier Platten besteht, dargestellt. Das Einbauelement 3 besteht wiederum aus drei Segmenten 9.

In den Fig. 7 bis 10 ist ein Einbauelement 3 dargestellt, das um ein eckiges Gehäuse 1 herum angeordnet ist und in eine eckige Einbauöffnung 4 eingesetzt ist. Daher hat das jeweilige Einbauelement 3 eine rechteckige Kontur sowohl auf seiner Innenseite als auch auf seiner Außenseite.

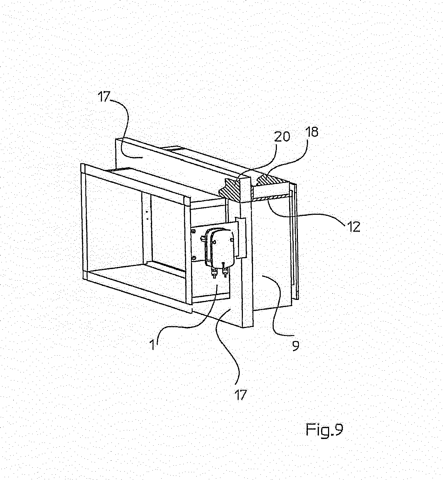

Bei dem Ausführungsbeispiel nach Fig. 9 besteht das Einbauelement 3 aus vier Segmenten 9. Bei diesem Ausführungsbeispiel weist keines der Segmente 9 eine Ausnehmung auf. Die Segmente 9 sind so in Bezug auf das Gehäuse 1 angeordnet, dass jedes Segment 9 mit einem seiner beiden Enden über eine Seite des Gehäuses 1 übersteht. Der überstehende Bereich des betreffenden Segmentes 9 ist mit der Stirnfläche des benachbarten Segments 9 in Kontakt, so dass sich ein allseitig geschlossenes Einbauelement 3 bildet.

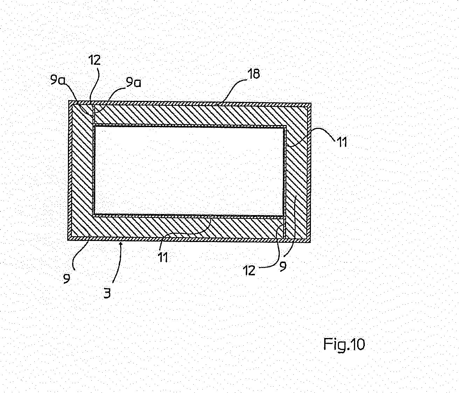

Fig. 10 zeigt lediglich das Einbauelement 3 einschließlich der Klebemassen 11 und 12. Wie Fig. 10 zu entnehmen ist, sind bei diesem Ausführungsbeispiel nur zwei Segmente 9 vorgesehen, die jeweils die Form eines Winkels haben. Die Stirnseite (Stoßkante 9a) des längeren Schenkels des einen Segmentes 9 ist mit der Seitenfläche (Stoßkante 9a) des kürzeren Schenkels des anderen Segmentes 9 in Kontakt. Da nur zwei Segmente 9 vorgesehen sind, berühren sich damit die Segmente 9 an zwei Stoßkanten 9a mit dem anderen Segment 9. Im Bereich sich berührender Stoßkanten 9a ist die Klebemasse 12 vorgesehen. Zur Fixierung des Einbauelementes 3 an dem Gehäuse 1 ist die angedeutete Klebemasse 11 vorgesehen.

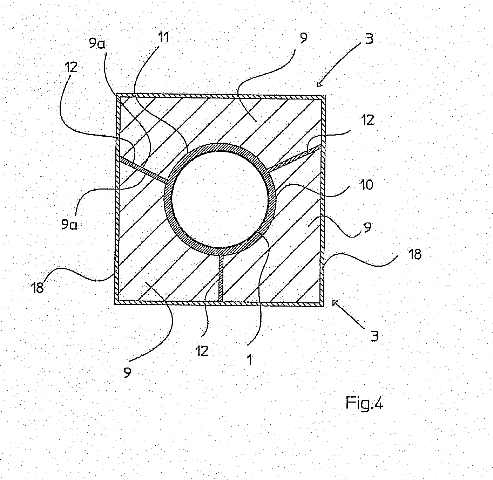

Zur Montage und zur Fixierung der Brandschutzklappe sind Halteösen 14 vorgesehen, die mit der Wand 5 verbunden sind. Die Schwenkachse der Absperrklappe befindet sich im eingebauten Zustand in dem von der Einbauöffnung 4 umfassten Bereich der Brandschutzklappe. Während bei der Brandschutzklappe beispielsweise nach Fig. 1 jede Halteöse 14 direkt mittels einer Schraube 15 an der Wand 5 angeschraubt ist, ist beispielsweise bei der Brandschutzklappe nach den Fig. 4 oder 5 eine Montageplatte 16 vorgesehen, an der die Halteösen 14 angreifen. In diesem Fall ist die Montageplatte 16 mittels geeigneter Befestigungsmittel an der Wand 5 befestigt.

Bei den Ausführungsbeispielen nach den Fig. 7 bis 10 ist zusätzlich noch eine rahmenartig ausgebildete Montagevorrichtung 17 mit einer rechteckigen Ausnehmung vorgesehen, die das Gehäuse 1 vollständig umfasst. Die Ränder der Ausnehmung berühren das Gehäuse 1. Mit einer seiner beiden Seitenflächen liegt die Montagevorrichtung 17 an der Wand 5 an. Die Montagevorrichtung 17 kann aus dem gleichen Material wie die Segmente 9 bestehen.

Bei dem in Fig. 9 dargestellten Ausführungsbeispiel besteht die Montagevorrichtung 17 aus zwei winklig ausgebildeten Elementen, die zu der rahmenartig ausgebildeten Montagevorrichtung 17 zusammengesetzt sind. Selbstverständlich ist auch eine andere Geometrie oder eine andere Ausgestaltung einer Montagevorrichtung 17, beispielsweise in Form von Laschen oder dergleichen, möglich.

Bei den Ausführungsbeispielen beispielweise nach den Fig. 1 und 7 ist die Breite jedes Segmentes 9 größer als die Breite der Wand 5. Es ist aber auch durchaus möglich, dass zwei Einbauelemente 3 in Strömungsrichtung S hintereinander angeordnet sind. In diesem Fall können die Segmente 9 schmaler ausgebildet sein.

Nicht dargestellt ist in den Figuren der Antrieb zur Betätigung der in dem Gehäuse 1 angeordneten Absperrklappe. Der Antrieb ist bei den dargestellten Ausführungsbeispielen auf der Montageplatte 2 beispielsweise mittels Schrauben befestigt. Bei den Ausführungsbeispielen nach den Fig. 3 und 5 weist die Stoßkante 9a eines Segmentes 9 des Einbauelementes 3 einen abgeschrägten Bereich 19 unter Bildung einer Ausnehmung auf. Diese Ausnehmung dient zur Aufnahme eines Eckbereichs des Antriebs.

## Patentansprüche

1. Einbauelement für eine Brandschutzklappe, die ein Gehäuse (1) mit einer darin um eine Schwenkachse herum schwenkbar gelagerte Absperrklappe umfasst, **dadurch gekennzeichnet, dass** das Einbauelement (3) das Gehäuse (1) außenseitig umfasst, wobei das Einbauelement (3) in Umfangsrichtung U wenigstens zwei Segmente (9) umfasst, die derart ausgebildet sind, dass jedes Segment (9) seitlich von außen, insbesondere in radialer Richtung, an dem Gehäuse (1) anbringbar ist, und wobei die Segmente (9) jedes Einbauelementes (3) sich entweder an zwei Stoßkanten (9a) mit dem anderen Segment (9) berühren oder aber sich an einer ersten Stoßkante (9a) mit dem einen benachbarten Segment (9) und an einer zweiten Stoßkante (9a) mit dem anderen benachbarten Segment (9) berühren, wobei die Dichte zumindest eines Segmentes (9), vorzugsweise die Dichte aller Segmente (9) des Einbauelementes (3), zwischen 120 kg/m³ und 180 kg/m³, vorzugsweise bei 150 kg/m³, liegt.

2. Einbauelement (3) nach dem vorhergehenden Anspruch, **dadurch gekennzeichnet, dass** das Einbauelement (3) in einer Richtung parallel zur Strömungsrichtung S luftdicht und damit nicht durchströmbar ist.

3. Einbauelement (3) nach einem der beiden vorhergehenden Ansprüche, **dadurch gekennzeichnet, dass** jedes Segment (9) je eine Ausnehmung (10) für einen Teilbereich des Gehäuses (1) aufweist, wobei jede Ausnehmung (10) derart ausgebildet ist, dass das Segment (9) seitlich von außen, insbesondere in radialer Richtung, an dem Gehäuse (1) anbringbar ist.

4. Einbauelement (3) nach einem der vorhergehenden Ansprüche, **dadurch gekennzeichnet, dass** zumindest ein Segment (9), vorzugsweise zumindest alle Segmente (9) des Einbauelementes (3), aus einem Mineralfasermaterial, insbesondere aus Steinwolle, Glaswolle, Keramikwolle oder dergleichen, bestehen.

5. Einbauelement (3) nach einem der vorhergehenden Ansprüche, **dadurch gekennzeichnet, dass** zwischen dem Gehäuse (1) und zumindest einem Segment (9) eine Klebemasse (11) vorgesehen ist.

6. Einbauelement (3) nach einem der vorhergehenden Ansprüche, **dadurch gekennzeichnet, dass** zumindest zwei sich berührende Segmente (9) des Einbauelementes (3) über eine Klebemasse (12) miteinander verbunden sind.

7. Einbauelement (3) nach einem der vorhergehenden Ansprüche, **dadurch gekennzeichnet, dass** zumindest bei einem Segment (9), vorzugsweise bei allen Segmenten (9), auf der dem Gehäuse (1) abgewandten Außenseitenfläche eine Beschichtung (18) vorgesehen ist.

8. Einbauelement (3) nach einem der vorhergehenden Ansprüche, **dadurch gekennzeichnet, dass** zumindest eine der beiden orthogonal zur Strömungsrichtung S ausgerichteten Seitenflächen des Einbauelementes (3) eine Beschichtung (20) aufweisen.

9. Einbauelement (3) nach einem der vorhergehenden Ansprüche, **dadurch gekennzeichnet, dass** zumindest eine orthogonal zur Strömungsrichtung S ausgerichtete Seitenfläche, vorzugsweise beide orthogonal zur Strömungsrichtung S ausgerichtete Seitenflächen, je eine Beschichtung (18) aufweisen und auch die dem Gehäuse (1) abgewandte Außenseitenfläche des Einbauelementes (3) eine Beschichtung (20) aufweist, wobei vorzugsweise die Beschichtung (18) und die Beschichtung (20) aus demselben Material bestehen.

10. Einbauelement nach einem der Ansprüche 5 bis 9, **dadurch gekennzeichnet, dass** die Klebemasse (11, 12, 13), die Beschichtung (18) und/oder die Beschichtung (20) aus einem intumeszierenden Material besteht(bestehen).

11. Einbauelement (3) nach einem der Ansprüche 6 bis 10, **dadurch gekennzeichnet, dass** als Beschichtung (18 und/oder 20) eine Farbbeschichtung, ein Vlies, eine Aluminiumbeschichtung oder dergleichen vorgesehen ist.

12. Brandschutzklappe mit einem Einbauelement (3) nach einem der vorhergehenden Ansprüche.

13. Brandschutzklappe nach dem vorhergehenden Anspruch, **dadurch gekennzeichnet, dass** in Längserstreckung L des Gehäuses (1) gesehen zumindest zwei Einbauelemente (3) vorgesehen sind, wobei jedes Einbauelement (3) aus wenigstens zwei Segmenten (9) mit je einer Ausnehmung (10) für einen Teilbereich des Gehäuses (1) besteht und wobei sich benachbarte Einbauelemente (3), insbesondere flächig über ihre jeweilige Stirnfläche, berühren.

14. Brandschutzklappe nach dem vorhergehenden Anspruch, **dadurch gekennzeichnet, dass** sich die Stoßkanten (9a) aller Einbauelemente (3) in Strömungsrichtung S gesehen nicht miteinander fluchtend angeordnet sind.

15. Brandschutzklappe nach einem der Ansprüche 13 oder 14, **dadurch gekennzeichnet, dass** zumindest zwei sich berührende Segmente (9) unterschiedlicher Einbauelemente (3) über eine Klebemasse miteinander verbunden sind.

16. Einbauelement nach dem vorhergehenden Anspruch, **dadurch gekennzeichnet, dass** die Klebemasse aus einem intumeszierenden Material besteht.

17. Brandschutzklappe nach einem der Ansprüche 12 bis 16, **dadurch gekennzeichnet, dass** an der Brandschutzklappe zumindest eine Halteöse (14) vorgesehen ist.
